# EUROPEAN PATENT APPLICATION

(11) **EP 4 796 601 A1**
(43) Date of publication of application: **26.08.2026**
(21) Application number: 24879952.0
(22) Date of filing: 04.09.2024
(51) Int. Cl.: C09D 5/10, C09D 7/20, C09D 163/00, C09D 177/00, C08G 59/46, C08G 59/62

(54) **ALUMINUM PASTE, PAINT COMPOSITION, COATING FILM, AND METHOD FOR PRODUCING SAME**

(30) Priority: 20.10.2023 KR 20230141460; 07.03.2024 KR 20240032599
(71) Applicant: HD Korea Shipbuilding & Offshore Engineering Co., Ltd., Seongnam-si, Gyeonggi-do 13553 (KR); Hyundai Heavy Industries Co., Ltd., Ulsan 44032 (KR); HD Hyundai Samho Co., Ltd., Jeollanam-do 58462 (KR)
(72) Inventor: HWANG, Kyoung-Sub, Seongnam-si Gyeonggi-do 13553 (KR); SONG, Eun-Ha, Seongnam-si Gyeonggi-do 13553 (KR); LEE, Kyung-Koo, Ulsan 44032 (KR)
(74) Representative: Maiwald GmbH
(86) International application number: PCT/KR2024/013296
(87) International publication number: WO 2025/084613

(57) **Abstract**

A paint composition according to an example of this disclosure includes an epoxy resin, a curing agent resin, and a dilution solvent, wherein the curing agent resin includes two or more selected from the group consisting of a polyamide resin, an amide adduct resin, a phenalkamine, and a phenalkamide, and the total content of the dilution solvent in the paint composition is 5-20 wt%.

## Description

### Technical Field

The present disclosure relates to an aluminum paste, a paint composition, a coating film and a method for producing the same.

### Background Art

In general, hypoallergenic and high-solids paints have recently been developed to minimize problems such as skin rashes in coating operators. However, high-solids paints exhibit high viscosity and have poor coating workability and thus impose many constraints on on-site application.

To facilitate coating operation, conventionally organic solvents such as xylene, which are volatile organic compounds (VOCs), were added to paint formulations in total contents exceeding 20 wt%, or a thinner composed of such organic solvents was added immediately before coating operation, thereby lowering the paint viscosity and enabling the coating operation.

However, due to the Clean Air Conservation Act and the like recently strengthened, the use of thinner, which is a volatile organic compound (VOC) emission substance , has been practically impossible, and accordingly, reducing the viscosity of the paint has become difficult. If the viscosity of the paints cannot be reduced, coating workability deteriorates and leads works such as spraying to be difficult, and problems such as poor coating film appearance and musculoskeletal diseases among coating operators can significantly affect the coating process.

In this regard, developing an excellent paint which contains less than 5 wt% of regulated substances (such as xylene and toluene) as defined by the Clean Air Conservation Act of Korea, substantially excludes organic solvents (thinners) to reduce VOC emissions and develops excellent coating workability, is difficult with existing technology. As such, when organic solvents (thinners) are substantially omitted in paint production, it is necessary to separately install heaters for storing the paint or to use two-component paint and two-component coating equipment, which can significantly affect shipyard production processes.

### Disclosure of Invention

### Technical Problem

An aspect of the present disclosure is to provide a paint composition having reduced VOC emissions and excellent eco-friendliness properties.

Another aspect of the present disclosure is to provide a paint composition having excellent resistance to explosions and fires during coating operation.

Another aspect of this disclosure is to provide a paint composition that is less harmful to the skin, thereby reducing the occurrence of problems such as skin rash among coating operators.

Another aspect of the present disclosure is to provide an aluminum paste having excellent eco-friendliness properties and excellent dispersibility of aluminum flakes.

### Solution to Problem

According to an aspect of the present disclosure, a paint composition includes an epoxy resin, a curing agent resin, and a dilution solvent, wherein the curing agent resin includes two or more selected from the group consisting of a polyamide resin, an amide adduct resin, a phenalkamine, and a phenalkamide, and the total content of the dilution solvent in the paint composition is 5-20 wt%.

The paint composition may further include an aluminum paste, and the aluminum paste may include aluminum flakes and a diluent solvent.

The content of the aluminum paste in the paint composition may be 1-20 wt%.

The diluent solvent may include one or more VOC-exempt substances selected from the group consisting of acetone, dimethyl carbonate, tert-butyl acetate, and 2-amino-2-methyl-1-propanol.

The content of the VOC-exempt substance in the paint composition may be 2-20 wt%.

The diluent solvent may further include VOC substance.

The weight ratio of the VOC substance to the VOC-exempt substance in the diluent solvent may be 1:1-1:3.

The paint composition may have a volume solids content of 70-94 vol%.

An aluminum paste according to an example includes aluminum flakes and a diluent solvent, wherein the aluminum flakes are included in a total content of 50-90 wt% based on the total weight of the aluminum paste, wherein the diluent solvent is included in a total content of 10-50 wt% based on the total weight of the aluminum paste, and wherein the aluminum paste has a content of the VOC substances (CVOC) of 400 g/L or less.

The aluminum paste may not include an organic solvent as a diluent solvent.

A coating film according to one example is produced from a paint composition according to any one of the above-mentioned examples.

The coating film may have a thickness of 1-2000 µm.

A method for producing a coating film according to an example includes the operations of: applying a paint composition according to any one of the above examples; and drying the paint composition applied on the substrate.

### Advantageous Effects of Invention

According to one example of this disclosure, a paint composition having a low VOC content that satisfies regulatory standards for eco-friendly paints can be provided.

According to another example of this disclosure, a paint composition having excellent coating workability for airless spraying or rolling operations can be provided.

According to another example of this disclosure, a paint composition having a high flashpoint and excellent safety against explosion and fire can be provided. The paint composition has a relatively high flashpoint and can therefore be safely used for a coating operation, even in environments with high operating temperatures.

According to another example of this disclosure, a paint composition having reduced dermal toxicity may be provided. The paint composition may reduce the occurrence of problems such as skin rashes in coating operators.

According to another example of this disclosure, an eco-friendly aluminum paste is provided in which aluminum flakes are uniformly dispersed to improve the corrosion resistance of a coating film.

### Best Mode for the Invention

Hereinafter, preferred examples of the present disclosure will be described with reference to various embodiments; however, it will be apparent to those skilled in the art that the embodiments may be modified to have various other forms, and the scope of the present disclosure is not limited to the examples described below.

### Paint composition

A paint composition according to one example includes an epoxy resin, a curing agent resin, and a dilution solvent, wherein the curing agent resin includes two or more selected from the group consisting of a polyamide resin, an amide adduct resin, a phenalkamine, and a phenalkamide, and the total content of the dilution solvent in the paint composition is 5-20 wt%.

As described above, conventional 'solvent-type paints' containing organic solvents that are volatile organic compounds (VOCs) and regulated substances such as xylene, in a total content exceeding 20 wt% may exhibit excellent coating workability but poor eco-friendliness properties, whereas 'solvent-free paints' that substantially do not include a diluent solvent may be eco-friendly but may have poor coating workability and high skin toxicity.

On the other hand, the paint composition is a 'low-solvent paint' including a relatively small total content of a diluent solvent, and may exhibit excellent eco-friendliness properties, coating workability, and safety. Specifically, the total content of the diluent solvent in the paint composition may be 7 wt% or more, 10 wt% or more, or 13 wt% or more, and may be 19 wt% or less, or 15 wt% or less.

According to an example, the paint composition may include VOC-exempt substances to reduce the VOC content of the composition. The VOC-exempt substances may refer to substances that do not correspond to the 37 hazardous air pollutants (HAPs) including specified hazardous air pollutants listed in Annex 2 (35 types; commonly applicable substances), substances applicable to industry category IV among regulated substances listed in Annex 10-2 (2 types; toluene and xylene (including o-, m-, and p-)) in 'Enforcement Rules of the Clean Air Conservation Act (effective Jan. 5, 2023)'.

Specifically, the diluent solvent may include one or more VOC-exempt substances selected from the group consisting of acetone, dimethyl carbonate, t-butyl acetate, and 2-amino-2-methyl-1-propanol.

Acetone (CAS No. 67-64-1), dimethyl carbonate (CAS No. 616-38-6), tert-butyl acetate (CAS No. 540-88-5), and 2-amino-2-methyl-1-propanol (CAS No. 124-68-5) are volatile organic compound (VOC) exempt substances for paints as designated in the 'Regulation on Designation of Exempt Substances for Volatile Organic Compounds Contained in Paints (revised March 7, 2022)' of the National Institute of Environmental Research, and refer to substances that the Director of the National Institute of Environmental Research designates to be excluded from organic compounds in paints that have a minimum boiling point at 1 atmosphere pressure of 250°C or less.

The content of the VOC-exempt substance in the paint composition may be 2-20 wt%. Specifically, the content of the VOC-exempt substance in the paint composition may be 3 wt% or more, 5 wt% or more, or 10 wt% or more, and may be 17 wt% or less, or 15 wt% or less.

### <Main part>

The paint composition, as a main resin, may include a main part containing an epoxy resin. The epoxy resin is not particularly limited; for example, it may be one or more selected from the group consisting of a liquid bisphenol A-type epoxy resin, a bisphenol F-type epoxy resin, and a bisphenol AD-type epoxy resin. The content of the main part in the paint composition may be 10-99 wt%, or 60-90 wt%. In addition, the content of the main resin in the paint composition may be 1-80 wt%, or 10-30 wt%.

The main part may further include a reactive diluent. The reactive diluent may be, for example, one or more compounds selected from the group consisting of alkyl glycidyl ether, glycidyl ester, 1,6-hexanediol diglycidyl ether, olefin epoxide, trimethylolpropane triglycidyl ether, alkylphenyl glycidyl ether, methylphenyl glycidyl ether, ethylphenyl glycidyl ether, and CARDOLITE NC-513. Specifically, the reactive diluent may be an aliphatic reactive diluent such as an alkyl glycidyl ether.

The reactive diluent may be multifunctional. When the reactive diluent is multifunctional, unlike when it is monofunctional, it can accelerate the drying process, lead to increased crosslinking, and contribute to excellent corrosion protection, which may be desirable. Further, the reactive diluent may be used in combination with a non-reactive diluent such as a hydrocarbon resin. When the main part further includes a reactive diluent, the content of the reactive diluent in the paint composition may be, for example, 5-20 wt%.

The main part may further include additives. For example, the additives may include a dispersant, an anti-foaming agent, a functional additive, a flow control agent, a non-reactive diluent, and the like.

The dispersant can adsorb onto pigment surfaces and maintain a constant spacing between pigments via electrostatic repulsion or steric hindrance, thereby preventing re-agglomeration of the pigments. Any dispersant commonly used in the art may be used as the dispersant without limitation; for example, a silicone-based dispersant or a non-silicone-based dispersant (e.g., a polycarboxylic acid polyester-type dispersant) may be used.

The anti-foaming agent is used to prevent coating film defects such as the formation of bubbles within the coating film, if bubbles remain in the coating film, adhesion to the substrate can be poor or physical properties can be deteriorated. Any anti-foaming agent commonly used in the art may be used as the anti-foaming agent without limitation. For example, the anti-foaming agent may be mineral oil-based, silicone-based, or non-silicone-based, and specifically, a silicone-based anti-foaming agent may be used to maximize anti-foaming performance.

The functional additive may be a silicone additive, such as polyethersiloxane or polyester siloxane, used to prevent foaming defects, to prevent cratering, to prevent color separation, to remove bubbles from the coating film surface, and to impart smoothness to the coating film.

The flow control agent may be any agent commonly used in the art without limitation, such as a bentonite-based flow-control agent, a polyamide powder, a polyamide wax, or a polyethylene wax; for example, Bentone 27, Bentone 34, Garamite, Clayvalac Ultra, Clayvalac LV, and Ticatrol ST can be used.

The non-reactive diluent may include a compound having a hydroxyl group or a siloxane group. The non-reactive diluent generally refers to a hydrocarbon resin, a plasticizer, an additive, a high-boiling solvent, or the like that does not react with a curing agent resin such as an amine-based compound; however, in this disclosure, the non-reactive diluent refers to a compound having a hydroxyl group or a siloxane group that can be more suitably used in eco-friendly paints than conventional organic solvents composed of VOC substances and that does not react with the curing agent resin. The compound having a hydroxyl group may be, for example, a cardanol aromatic derivative compound (e.g., CARDOLITE Lite 2020), benzyl alcohol, or the like, and the compound having a siloxane group may be, for example, a silane-based compound such as an epoxy silane or an amino silane.

When the main part further includes such an additive, the total content of the additive in the paint composition may be, for example, 1-10 wt%.

The main part may further include pigments. For example, the pigments may include at least one of color pigments and extender pigments. The color pigments are used to express color to a coating film of the paint composition, and color pigments conventionally used in the art may be used without limitation. For example, TiO₂ may be used as a white pigment, and carbon black, red iron oxide, and yellow iron oxide may be used as black pigments. The extender pigments may be one or more selected from silica, feldspar, aluminum oxide, barite (natural barium sulfate), blanc fixe (synthetic barium sulfate), kaolin, aluminum flakes, talc, and calcium carbonate.

When the main part further includes such pigments, the total pigment content in the paint composition may be, for example, 20-40 wt%.

The total content of the diluent solvent in the main part may be from 1-18 wt%. Specifically, the total content of the diluent solvent in the main part may be 6 wt% or more, 8 wt% or more, or 10 wt% or more, and may be 13 wt% or less.

When the diluent solvent includes the above-described VOC-exempt substance, the content of the VOC-exempt substance in the main part may be 0.1-15 wt%. Specifically, the content of the VOC-exempt substance in the main part may be 2 wt% or more, 4 wt% or more, or 8 wt% or more, and may be 12 wt% or less.

The paint composition may have a weight ratio of the VOC-exempt substance to the main resin of 0.1-1.0. Specifically, the weight ratio of the VOC-exempt substance to the main resin may be 0.2 or more, 0.4 or more, or 0.6 or more, and 0.9 or less or 0.75 or less.

In some examples, the paint composition may further include an aluminum paste, and the aluminum paste may include aluminum flakes and a diluent solvent. Specifically, the paint composition may be a premium eco-friendly paint including an aluminum paste as a pigment in a main part. Further details of the aluminum paste are described below.

### <Aluminum paste>

An aluminum paste according to an example includes aluminum flakes and a diluent solvent, wherein the aluminum flakes are included in a total content of 50-90 wt% based on the total weight of the aluminum paste, wherein the diluent solvent is included in a total content of 10-50 wt% based on the total weight of the aluminum paste, and wherein the aluminum paste has a content of the VOC substances (CVOC) of 400 g/L or less.

The aluminum paste is a paste composition in which aluminum flakes are dispersed in a diluent solvent, exhibits both eco-friendliness properties and a high-solids characteristic, and is suitable for use as an eco-friendly coating.

The aluminum flakes are capable of forming a thin, robust oxide film on surfaces exposed to air so that exhibiting very stable properties, and capable of improving the corrosion resistance and reflective properties of the paint composition to superior level. The diluent solvent effectively disperses the aluminum flakes and can improve milling efficiency by lowering the viscosity of the aluminum paste.

The aluminum flakes are included in a total content of 50-90 wt% based on the total weight of the aluminum paste. Specifically, the aluminum flakes may be included in a total content of 60 wt% or more, 65 wt% or more, 70 wt% or more, or 75 wt% or more, and may be included in a total content of 85 wt% or less, based on the total weight of the aluminum paste.

The diluent solvent is included in a total content of 10-50 wt% based on the total weight of the aluminum paste. Specifically, the diluent solvent may be included in a total content of at least 15 wt% or at least 20 wt%, and may be included in a total content of at most 35 wt% or at most 30 wt%, based on the total weight of the aluminum paste.

By adjusting the contents of the aluminum flakes and the diluent solvent to the ranges described above, excellent corrosion resistance of the coating film can be achieved while maintaining the solids content of the paint composition within an appropriate range.

The diluent solvent may include at least one eco-friendly solvent selected from the group consisting of a VOC-exempt substance, a reactive diluent, and a non-reactive diluent.

The VOC-exempt substance may include at least one selected from the group consisting of acetone, dimethyl carbonate, tert-butyl acetate, and 2-amino-2-methyl-1-propanol; the reactive diluent may include a compound having an epoxy group; and the non-reactive diluent may include a compound having a hydroxyl group or a siloxane group. That is, the aluminum paste may include one or more eco-friendly solvents selected from the group consisting of the aforementioned VOC-exempt substances, reactive diluents, and non-reactive diluents.

The aluminum paste may include the above-described eco-friendly solvent to reduce the total content of conventional organic solvent used, and is suitable for eco-friendly paints because the content of the VOC substances is relatively low. Hereinafter, the eco-friendly solvent is described in detail below.

The VOC-exempt substances may include at least one selected from the group consisting of acetone, dimethyl carbonate, t-butyl acetate, and 2-amino-2-methyl-1-propanol. A detailed description of the VOC-exempt substances is omitted because it would be redundant with the foregoing description.

When the aluminum paste includes a VOC-exempt substance, the content thereof may be 5 to 50 wt%. Specifically, the content of the VOC-exempt substance in the aluminum paste may be 10 wt% or more, 17 wt% or more, 20 wt% or more, or 30 wt% or more, and may be 40 wt% or less, or 35 wt% or less.

The reactive diluent may include a compound having an epoxide group. Specifically, the compound having an epoxide group may be formed from a modified epoxy compound and can chemically react, via the epoxide group, with a curing agent resin such as an amine-based compound included in a paint to form a bond. The reactive diluent may include, for example, one or more of alkyl glycidyl ether, phenyl glycidyl ester, 1,6-hexanediol diglycidyl ether, 1,4-butanediol diglycidyl ether, epichlorohydrin, and cashew nut shell oil derivatives (CARDOLITE NC-513). Specifically, the reactive diluent may be an aliphatic reactive diluent including compounds such as alkyl glycidyl ethers having a C1-C16 alkyl group.

When the compound containing epoxide groups is multifunctional having two or more functional groups, it may be preferable because, compared to a monofunctional compound, it can accelerate the drying process, increase crosslinking, and contribute to improved corrosion resistance.

When the aluminum paste includes a reactive diluent as an eco-friendly paint, its content may be 5 to 50 wt%. Specifically, the content of the reactive diluent in the aluminum paste may be 10 wt% or more, 17 wt% or more, 20 wt% or more, or 30 wt% or more, and may be 40 wt% or less, or 35 wt% or less.

The non-reactive diluent may include a compound having a hydroxyl group or a siloxane group. The non-reactive diluent generally refers to a hydrocarbon resin, a plasticizer, an additive, a high-boiling solvent, or the like that does not react with a curing agent resin such as an amine-based compound; however, in this disclosure, the non-reactive diluent refers to a compound having a hydroxyl group or a siloxane group that can be more suitably used in eco-friendly paints than conventional organic solvents composed of VOC substances and that does not react with the curing agent resin. The compound having a hydroxyl group may be, for example, a cardanol aromatic derivative compound (e.g., CARDOLITE Lite 2020), benzyl alcohol, or the like, and the compound having a siloxane group may be, for example, a silane-based compound such as an epoxy silane or an amino silane.

When the aluminum paste includes a non-reactive diluent as an eco-friendly paint, the content thereof may be 5 to 50 wt%. Specifically, the content of the non-reactive diluent in the aluminum paste may be 10 wt% or more, 17 wt% or more, 20 wt% or more, or 30 wt% or more, and may be 40 wt% or less or 35 wt% or less.

The above-mentioned reactive diluent and non-reactive diluent may be combined and included in an aluminum paste, in which case the total content of the reactive diluent and the non-reactive diluent in the aluminum paste may be 5 to 50 wt%. Specifically, the total content of the reactive diluent and the non-reactive diluent in the aluminum paste may be 10 wt% or more, 17 wt% or more, 20 wt% or more, or 30 wt% or more, and may be 40 wt% or less, or 35 wt% or less.

When the aluminum paste includes an eco-friendly solvent, the total content of the eco-friendly solvent may be 10 to 50 wt% based on the total weight of the aluminum paste. Specifically the total content of the VOC-exempt substances, reactive diluents, and non-reactive diluents included in the aluminum paste may be 10 to 50 wt%, more specifically 17 wt% or more, 20 wt% or more, or 30 wt% or more, and may be 40 wt% or less, or 35 wt% or less.

When the aluminum paste includes an eco-friendly solvent, the weight ratio (A/B) of the aluminum flakes (A) to the total content (B) of the eco-friendly solvent included in the aluminum paste may range from 1 to 20. Specifically, the weight ratio (A/B) of the aluminum flakes (A) to the total content (B) of the eco-friendly solvent included in the aluminum paste may be at least 1.5 or at least 3, and may be at most 9, 7, 5, or 3.

When the contents of eco-friendly solvents, such as VOC-exempt substances, reactive diluents, and non-reactive diluents, and the weight ratio between the eco-friendly solvents and the aluminum flakes are adjusted within the ranges described above, the aluminum paste and the paint composition can achieve excellent eco-friendliness properties without adversely affecting the improvement in corrosion resistance of the coating film provided by the addition of the aluminum flakes.

The aluminum paste may not include an organic solvent as a diluent solvent. The organic solvent may include VOC substances such as aliphatic hydrocarbon compounds, for example solvent naphtha, mineral spirit, hydrodesulfurized heavy naphtha, and the like.

Specifically, the aluminum paste may include, only the aforementioned eco-friendly solvent as a diluent solvent, such that the content of organic solvent in the aluminum paste may be 0 wt%. In this case, VOC substances emissions from the paint composition including the aluminum paste may be reduced, thereby improving the eco-friendliness properties of the paint.

The aluminum paste may have a solids content by weight of 50 wt% or more, 60 wt% or more, 65 wt% or more, or 70 wt% or more, and may be 90 wt% or less or 80 wt% or less. In addition, the specific gravity of the aluminum paste may be 1.5 or more, 1.55 or more, 1.6 or more, 1.7 or more, or 1.8 or more, and may be 5 or less, 3 or less, or 2 or less.

The aluminum paste may have a content of the VOC substances (C_{VOC}) of 400 g/L or less. Specifically, the aluminum paste may have a C_{VOC} value of 300 g/L or less, and may have a value of 0.1 g/L or more, 1 g/L or more, 10 g/L or more, or 100 g/L or more. When the C_{VOC} value of the aluminum paste is within the above range, the VOC content is relatively low, thereby providing a composition that is eco-friendly and highly effective in reducing VOC emissions. The C_{VOC} value may be calculated according to the following Equation 1. Here, the paint composition in the following Equation 1 may refer to the aluminum paste. ${C}_{VOC} = \left(100-NV-{M}_{w}-\sum Es\right) X ρs X 10$

In Equation 1,
C_{VOC} is the volatile organic compounds (VOC) content (g/L) in a paint composition,
NV is the solids content (wt%) in a paint composition,
M_{w} is the water content (wt%) in the paint composition,
ΣEs is total content of volatile organic compounds (VOC)-exempt substances (wt%) in a paint composition,
ρs is the density (g/ml) of the paint composition at 23°C.

Equation 1 is a calculation formula based on 'Notification on Methods for Calculating the Content of Volatile Organic Compounds in Paints and Container Labeling, etc. (effective Aug. 19, 2015)' of the National Institute of Environmental Research of Korea, and, according to Equation 1, the content of volatile organic compounds (VOC) in the aluminum paste can be calculated and expressed as C_{VOC}.

Specifically, Equation 1 may be a modified formula of Equation 1-1 below when the aluminum paste is a paint composition and the maximum dilution ratio (D_{MAX}) is 0. ${C}_{VOC} = \frac{\left[\left(100-NV-{M}_{w}-\sum Es\right)X ρs X 10+{D}_{MAX} X\frac{100 - {M}_{wt} - \sum Est}{100}X ρd X 10\right]}{\left(100+{D}_{MAX}\right) / 100}$

In Equation 1-1, C_{VOC} is the volatile organic compounds (VOC) content (g/L) in the paint composition; NV is the solids content (wt%) in the paint prior to dilution; M_{w} is the water content (wt%) in the paint prior to dilution; M_{wt} is the water content (wt%) in the diluent solvent; ∑Es is the total content of volatile organic compounds (VOC)-exempt substances (wt%) in the paint prior to dilution; ΣEst is the total content of volatile organic compounds (VOC)-exempt substances (wt%) in the diluent solvent; ρs is the density (g/ml) of the paint prior to dilution at 23°C; ρd is the density (g/ml) of the diluent solvent at 23°C; and D_{MAX} is the maximum dilution ratio which is the ratio of diluent solvent (vol%) that can be used as much as possible when diluting paint with a diluent solvent.

In Equations 1 and 1-1, a test or a measurement for NV, M_{w}, M_{wt}, ΣEs, ΣEst, ρs, ρd, and the like may be conducted in accordance with the 'Notification on Methods for Calculating the Content of Volatile Organic Compounds in Paints and Container Labeling, etc. (effective August 19, 2015)'.

The aluminum paste may further include an additive. Specifically, the aluminum paste may further include one or more additives selected from a lubricant and an oil. When the aluminum paste further includes a lubricant, thermal adhesion between aluminum flake particles in powder form may be prevented. In addition, when the aluminum paste further includes oil, heat generation during milling may be reduced and dispersibility may be improved.

The lubricant may be a fatty acid compound such as oleic acid or stearic acid, and the oil may be a silicone oil. In addition, when the aluminum paste further includes the above-described types of additives, the content thereof may be 0.1 to 10 wt%, specifically 1 to 5 wt%.

The content of the aluminum paste in the paint composition may be 1-20 wt%. Specifically, the content of the aluminum paste in the paint composition may be 3 wt% or more, 5 wt% or more, 7 wt% or more, or 9 wt% or more, and may be 17 wt% or less, 13 wt% or less, or 11 wt% or less. When the content of the aluminum paste is adjusted within the above-described range, the corrosion resistance of the coating film can be secured at an excellent level while the solids content of the paint composition can be maintained within an appropriate range.

### <Curing agent part>

The paint composition may include a curing agent part containing a curing agent resin. The curing agent resin is a component that is mixed with and cured through a bonding reaction with the main resin, an epoxy resin, and the curing agent resin includes two or more selected from the group consisting of a polyamide resin, an amide adduct resin, a phenalkamine, and a phenalkamide.

In some examples, the curing agent resin may include two components: a polyamide resin and an amide adduct resin. The weight ratio of the polyamide resin and the amide adduct resin may be 3:1 to 1:3, 1:1 to 2:1, or 2:1 to 1:1.

In some examples, the curing agent resin may include two components: a polyamide resin and a phenalkamine. The weight ratio of the polyamide resin to the phenalkamine may be 3:1 to 1:3, 1:1 to 2:1, or 2:1 to 1:1.

In some examples, the curing agent resin may include two components: a polyamide resin and a phenalkamide. The weight ratio between the polyamide resin and the phenalkamide may be 3:1 to 1:3, 1:1 to 2:1, or 2:1 to 1:1.

In some embodiments, the curing agent resin may include two components: an amide adduct resin and a phenalkamine. The weight ratio of the amide adduct resin to the phenalkamine may be from 3:1 to 1:3, from 1:1 to 2:1, or from 2:1 to 1:1.

In some examples, the curing agent resin may include two components: an amide adduct resin and a phenalkamide. The weight ratio of the amide adduct resin to the phenalkamide may be 3:1 to 1:3, 1:1 to 2:1, or 2:1 to 1:1.

In some examples, the curing agent resin may include two components: a phenalkamine and a phenalkamide. The weight ratio of the phenalkamine to the phenalkamide may be 3:1 to 1:3, 1:1 to 2:1, or 2:1 to 1:1.

Low molecular amines such as aliphatic amines and cycloaliphatic amines which have been commonly used as curing agent resins, have relatively high dermal toxicity and, can cause skin rashes in workers during coating operations when contained alone in a paint composition. In contrast, the curing agent resins included in the paint composition may include two or more resins selected from the group consisting of polyamide resins, amide adduct resins, phenalkamines, and phenalkamides, which are relatively less likely to cause dermal toxicity, thereby reducing the dermal toxicity of the paint composition. Accordingly, the occurrence of skin rashes in workers during coating operations using the paint composition can be mitigated.

The content of the curing agent part in the paint composition may be 1 to 40 wt% or 10 to 30 wt%. Also, the total content of the curing agent resin in the paint composition may be 10 to 20 wt% or 13 to 17 wt%.

The curing agent part may further include an additive. For example, the additive may include a curing accelerator, a non-reactive diluent, and the like. The curing accelerator may include at least one of tri dimethyl amino methyl phenol (e.g., ANCAMINE K54), triphenyl phosphite, and aminoethyl piperazine. In addition, the non-reactive diluent may include an ether alcohol (CARDOLITE Lite 2020). When the curing agent part further includes such an additive, the total content of the additives in the curing agent part may be, for example, 1 to 5 wt%.

The total content of diluent solvent in the curing agent part may be 0.1-5 wt%. Specifically, the total content of the diluent solvent in the curing agent part may be 1 wt% or more, 2 wt% or more, or 3 wt% or more, and may be 4 wt% or less.

When the diluent solvent includes the above-described VOC-exempt substance, the content of the VOC-exempt substance in the curing agent part may be 0.1-5 wt%. Specifically, the content of the VOC-exempt substance in the curing agent part may be 1 wt% or more, 2 wt% or more, or 3 wt% or more, and may be 4 wt% or less.

In the paint composition, the weight ratio of the VOC-exempt substance to the curing agent resin may be from 0.1 to 1.0. Specifically, the weight ratio of the VOC-exempt substance to the curing agent resin may be 0.3 or more, 0.5 or more, or 0.7 or more, and may be 0.9 or less, or 0.8 or less.

### <VOC substances>

The paint composition may further include VOC substances in addition to the aforementioned VOC-exempt substance as a diluent solvent. Specifically, at least one of the main part and the curing agent part may further include a VOC substance as a diluent solvent. That is, the diluent solvent may consist solely of the aforementioned VOC-exempt substance, or, if necessary, may further include VOC substances such as xylene, toluene, 4-methyl-2-pentanone, ethylbenzene, and 1,2,4-trimethylbenzene.

If the paint composition further includes a VOC substance as a diluent solvent, the content of the VOC-exempt substance in the diluent solvent may be equal to or greater than the content of the VOC substances. For example, the weight ratio of the VOC substance to the VOC-exempt substance in the diluent solvent may be from 1:1 to 1:3. In this case, the paint composition can maintain workability while improving eco-friendliness properties.

When the paint composition further includes a VOC substance as a diluent solvent, the content of the VOC substances content in the paint composition may be 10 wt% or less or 5 wt% or less, and may be 0.1 wt% or more or 1 wt% or more.

When the paint composition further includes a VOC substance as a diluent solvent, the diluent solvent of the main part of the paint composition may further include VOC substances. In this case, the content of the VOC substances in the main part may be 7 wt% or less or 4 wt% or more, and may be 0.1 wt% or more or 1 wt% or more.

When the paint composition further includes a VOC substance as a diluent solvent, the diluent solvent in the curing agent part of the paint composition may also include VOC substances. In this case, the content of the VOC substances in the curing agent part may be 4 wt% or less or 2 wt% or more, and may be 0.01 wt% or more or 0.5 wt% or more.

### <Properties of a paint composition>

The paint composition may have a VOC content (C_{VOC}) of 50 to 150 g/L. The VOC content (C_{VOC}) may be calculated according to Equation 1-1.

Specifically, the paint composition may have a C_{VOC} value of 70 g/L or more, or 90 g/L or more, and may be 100 g/L or less. When the C_{VOC} value of the paint composition is within the above-described range, the VOC content of the paint composition is relatively low, thereby providing a paint composition that is highly effective in reducing VOC emissions.

The paint composition may contain less than 5 wt% of regulated substances. The regulated substances may be substances defined under the Clean Air Conservation Act of Korea as being harmful to humans and the environment, and may be substances that correspond to the 37 hazardous air pollutants (HAPs) including specified hazardous air pollutants listed in Annex 2 (35 types; commonly applicable substances), and substances applicable to industry category IV among industry-specific regulated substances listed in Annex 10-2 (2 types; toluene and xylene (including o-, m-, and p-)) in 'Enforcement Rules of the Clean Air Conservation Act (effective Jan. 5, 2023)'.

The paint composition may include less than 5 wt% of the regulated substances, thereby providing a paint that satisfies eco-friendly standards prescribed by law. Specifically, the regulated substances content in the paint composition may be less than 4 wt%, may be 0.1 wt% or more, or may be 1 wt% or more. In addition, the paint composition may have a regulated substances content that is substantially 0 wt%.

The paint composition may have a solids content of 70 to 94 vol%. Specifically, the solids content of the paint composition may be at least 72 vol%, at least 80 vol%, or at least 85 vol%, and may be at most 90 vol%. When the solids content of the paint composition is within the above-described range, the paint composition may exhibit relatively high-solids characteristics, and thus may provide excellent high-build properties (ease of forming coating film thickness) at edge portions of structures that are prone to poor coating film formation during coating.

When the solids content of the paint composition is within the above-described range, the flashpoint of the paint composition is relatively high, and safety against explosion and fire may therefore be excellent. Specifically, the flashpoint of the paint composition may be 25°C or more. More specifically, the flashpoint of the paint composition may be 30°C or more, 40°C or more, or 50°C or more, and may be 100°C or less or 60°C or less.

During coating operations, a higher flashpoint of the paint provides better protection against explosion and fire, and epoxy paints are generally considered suitable for use in workplaces such as shipyards when the flashpoint is 21°C or higher. Therefore, when the flashpoint of the paint composition is as described above, safety during coating operations in high-temperature environments may be further improved.

The paint composition may have a viscosity of 110 KU or less at 23°C. Specifically, the paint composition may have a viscosity of 107 KU or less, 100 KU or less, or 95 KU or less at 23°C, and may have a viscosity of 1 KU or more, 10 KU or more, or 50 KU or more. When the paint composition has a viscosity within the above-described range at room temperature, coating operations such as spraying can be readily performed, thereby improving coating workability to an excellent level. The viscosity value may be measured in an undiluted state or in a state diluted to 5 vol%.

The paint composition may have a sag resistance value of 1000 µm or less. Specifically, the paint composition may have a sag resistance value of 800 µm or less, or 750 µm or less, and may have a value of at least 1 µm, at least 10 µm, at least 100 µm, or at least 600 µm. When the sag resistance (SAG) value of the paint composition is within the above range, the sag resistance of the paint after dilution is appropriate, whereby coating workability and coating film abrasion resistance can be further improved. The sag resistance may be a value measured in a diluted state at a dilution ratio of 5 vol%.

### Coating film and method for producing the coating film

A coating film according to one example is produced from a paint composition according to any one of the above-mentioned examples. Specifically, the coating film may be formed through a process of drying the paint composition applied on a substrate. The use of the paint is not particularly limited, and accordingly the materials of the substrate is also not particularly limited and may be appropriately varied.

For example, the paint may be coated to the inner or outer surface of a tank for transporting chemicals or the like to form a coating film, and the substrate may include metals such as iron, steel, ferroalloys, carbon steel, mild steel, alloy steel, stainless steel, zinc, aluminum, and the like.

The thickness of the coating film may be 1-2000 µm. For example, the thickness of the coating film may be 10 µm or more, 100 µm or more, or 200 µm or more, and may be 1000 µm or less, 500 µm or less, or 300 µm or less. However, the thickness of the coating film is not limited thereto and may be formed to an appropriate thickness on a substrate depending on the application.

A method for producing a coating film according to an example includes the operations of: applying a paint composition according to any one of the above-described examples on a substrate; and drying the paint composition applied on the substrate.

The method for applying the paint composition onto a substrate is not particularly limited; for example, the composition may be applied to the substrate surface by conventional coating methods such as airless spray coating, air spray coating, brush coating, or roller coating.

The process of drying the paint composition is not particularly limited and may be appropriately determined depending on the coating film formation method, the type of substrate, the intended application, the coating environment, and the like. For example, drying may be carried out at 5-35°C for 12-240 hours. Further, depending on the application, drying and curing may be carried out under natural conditions, or forced drying and curing, for example by heating or blowing, may be employed.

In addition, the method for producing a coating film may form the target coating film thickness by a single coating or by two or more coatings. Considering the convenience of coating film thickness control and residual organic solvent in the coating film, it may be preferable to form the coating film by two or more coatings. When two or more coatings are applied, a coating film may be formed by repeating operations of: applying a paint composition according to any one of the above-described examples onto a substrate (S1); and drying the paint composition applied onto the substrate (S2), on a previously produced coating film.

According to the coating film and the method for producing the coating film, VOC emissions can be reduced, and by using a paint composition with improved viscosity and the like, coating workability can be improved to an excellent level while complying with the mandatory paint usage rate stipulated as a regulatory standard under the national Clean Air Conservation Act.

### Mode for the Invention

### Embodiment

### 1. General-purpose paint composition

### 1) Production of a paint composition

### (1) main part (A)

Bisphenol A-type (BPA) epoxy resin was employed as the main resin; an aliphatic reactive diluent (alkyl glycidyl ether) was employed as the reactive diluent; the non-silicone dispersant soybean lecithin, a silicone-based anti-foaming agent (BYKETOL-SPECIAL), a flow control agent (CRAYVALLAC), and a non-reactive diluent (CARDOLITE Lite 2020) were employed as additives; and colored pigments (white TiO₂₋ and carbon black) and extender pigments (talc and feldspar) were employed as pigments .

### (2) curing agent part (B)

Five resins (a polyamide, an amide adduct, a phenalkamine, an aliphatic amine, and a cycloaliphatic amine) were employed as curing agent resins, and a curing accelerator (the tertiary amine, ANCAMINE K54) and a non-reactive diluent (CARDOLITE Lite 2020) were employed as additives.

### (3) Diluent solvent

Xylene and n-butanol were employed as VOC substances, and acetone, dimethyl carbonate, tert-butyl acetate, and 2-amino-2-methyl-1-propanol were employed as VOC-exempt substances.

Paint compositions of Embodiments 1 to 12 and Comparative Examples 1 to 6, each including the main part (A) and the curing agent part (B) in the formulations shown in Tables 1 and 2 below, were produced.

**Table 1**

| Classification | Raw Material Name | | | Content (wt%) | | | | | | | | | |
|---|---|---|---|---|---|---|---|---|---|---|---|---|---|
| | | | | Embodiment | | | | | | | | | |
| | | | | 1 | 2 | 3 | 4 | 5 | 6 | 7 | 8 | 9 | 10 |
| Main Part (A) | Main Resin (a) (Bisphenol-A type epoxy resin; BPA) | | | 20 | 20 | 20 | 20 | 20 | 20 | 20 | 20 | 20 | 20 |
| | Reactive Diluent (Alkyl glycidyl ether) | | | 8 | 12 | 2 | 0 | 8 | 2 | 8 | 8 | 8 | 8 |
| | Additive | Dispersant (Soybean Lecithin) | | 1. 3 | 1. 3 | 1. 3 | 1. 3 | 1. 3 | 1. 3 | 1. 3 | 1. 3 | 1. 3 | 1. 3 |
| | | Silicone-based Anti-foamer (BYKETOL-SPECIAL) | | 1. 3 | 1. 3 | 1. 3 | 1. 3 | 1. 3 | 1. 3 | 1. 3 | 1. 3 | 1. 3 | 1. 3 |
| | | Flow Control Agent (CRAYVALLAC) | | 1. 3 | 1. 3 | 1. 3 | 1. 3 | 1. 3 | 1. 3 | 1. 3 | 1. 3 | 1. 3 | 1. 3 |
| | | Non-reactive Diluent (CARDOLITE Lite 2020) | | 2 | 2 | 2 | 2 | 2 | 2 | 2 | 2 | 2 | 2 |
| | Colored Pigment | White TiO2 | | 4 | 4 | 4 | 4 | 4 | 4 | 4 | 4 | 4 | 4 |
| | | Carbon Black | | 0. 1 | 0. 1 | 0. 1 | 0. 1 | 0. 1 | 0. 1 | 0. 1 | 0. 1 | 0. 1 | 0. 1 |
| | Extender Pigment | Talc | | 18 | 18 | 18 | 17 | 18 | 18 | 18 | 18 | 18 | 18 |
| | | Feldspar | | 18 | 18 | 18 | 17 | 18 | 18 | 18 | 18 | 18 | 18 |
| | Diluent Solvent | VOC Substance | Xylene | 0 | 0 | 0 | 0 | 0 | 0 | 0 | 0 | 0 | 0 |
| | | | n-Butyl Alcohol | 2 | 1 | 4 | 4 | 2 | 4 | 3 | 2 | 2 | 2 |
| | | VOC Exempt Substance | Acetone | 0 | 0 | 0 | 0 | 0 | 0 | 0 | 4 | 0 | 0 |
| | | | Dimethyl Carbonate | 4 | 1 | 8 | 12 | 4 | 8 | 3 | 0 | 0 | 0 |
| | | | tert-Butyl Acetate | 0 | 0 | 0 | 0 | 0 | 0 | 0 | 0 | 4 | 0 |
| | | | 2-Amino-2-methyl-1-propanol | 0 | 0 | 0 | 0 | 0 | 0 | 0 | 0 | 0 | 4 |
| | Total | | | 80 | 80 | 80 | 80 | 80 | 80 | 80 | 80 | 80 | 80 |
| Curing Agent Part (B) | Curing Agent Resin (b) | Resin 1 | Polyamide | 9 | 5 | 9 | 8 | 9 | 0 | 9 | 9 | 9 | 9 |
| | | Resin 2 | Amide Adduct | 5 | 9 | 5 | 6 | 0 | 7 | 5 | 5 | 5 | 5 |
| | | Resin 3 | Phenalkamine | 0 | 0 | 0 | 0 | 5 | 7 | 0 | 0 | 0 | 0 |
| | Additi | Curing | | 1. | 1. | 1. | 1. | 1. | 1. | 1. | 1. | 1. | 1. |
| | ve | Accelerator (Tertiary amine ANCAMINE K54) | | 5 | 5 | 5 | 5 | 5 | 5 | 5 | 5 | 5 | 5 |
| | | Non-reactive Diluent (CARDOLITE Lite 2020) | | 1. 5 | 1. 5 | 1. 5 | 1. 5 | 1. 5 | 1. 5 | 1. 5 | 1. 5 | 1. 5 | 1. 5 |
| | Diluent Solvent | VOC Substance | Xylene | 0 | 0 | 0 | 0 | 0 | 0 | 0 | 0 | 0 | 0 |
| | | VOC Substance | n-Butyl Alcohol | 1 | 1 | 1 | 1 | 1 | 1 | 1. 5 | 1 | 1 | 1 |
| | | VOC Exempt Substance | Acetone | 0 | 0 | 0 | 0 | 0 | 0 | 0 | 2 | 0 | 0 |
| | | VOC Exempt Substance | Dimethyl Carbonate | 2 | 2 | 2 | 2 | 2 | 2 | 1. 5 | 0 | 0 | 0 |
| | | VOC Exempt Substance | tert-Butyl Acetate | 0 | 0 | 0 | 0 | 0 | 0 | 0 | 0 | 2 | 0 |
| | | VOC Exempt Substance | 2-Amino-2-methyl-1-propanol | 0 | 0 | 0 | 0 | 0 | 0 | 0 | 0 | 0 | 2 |
| | Total | | | 20 | 20 | 20 | 20 | 20 | 20 | 20 | 20 | 20 | 20 |
| Total VOC SubstanceContent | | | | 3 | 2 | 5 | 5 | 3 | 5 | 4. 5 | 3 | 3 | 3 |
| Total VOC Exempt SubstanceContent | | | | 6 | 3 | 10 | 14 | 6 | 10 | 4. 5 | 6 | 6 | 6 |
| Total Diluent Solvent Content | | | | 9 | 5 | 15 | 19 | 9 | 15 | 9 | 9 | 9 | 9 |
| Total (A+B) | | | | 10 0 | 10 0 | 10 0 | 10 0 | 10 0 | 10 0 | 10 0 | 10 0 | 10 0 | 10 0 |

**Table 2**

| Classification | Raw Material Name | | | Content (wt%) | | | | | | | |
|---|---|---|---|---|---|---|---|---|---|---|---|
| | | | | Comparative Example | | | | | | Embodiment | |
| | | | | 1 | 2 | 3 | 4 | 5 | 6 | 11 | 12 |
| Main Part (A) | Main Resin (a) (Bisphenol-A Type Epoxy Resin; BPA) | | | 32 | 20 | 18 | 20 | 20 | 20 | 20 | 20 |
| Main Part (A) | Reactive Diluent (Alkyl Glycidyl Ether) | | | 8 | 0 | 6 | 8 | 8 | 8 | 8 | 8 |
| | Additive | Dispersant (Soybean Lecithin) | | 1 | 1. 3 | 1 | 1. 3 | 1. 3 | 1. 3 | 1. 3 | 1.3 |
| | | Silicone-based Anti-foamer (BYKETOL-SPECIAL) | | 1 | 1. 3 | 1 | 1. 3 | 1. 3 | 1. 3 | 1. 3 | 1.3 |
| | | Flow Control Agent (CRAYVALLAC) | | 2 | 1. 3 | 2 | 1. 3 | 1. 3 | 1. 3 | 1. 3 | 1.3 |
| | | Non-reactive Diluent (CARDOLITE Lite 2020) | | 4 | 0 | 1 | 2 | 2 | 2 | 2 | 2 |
| | Colored Pigment | White TiO2 | | 7. 8 | 4 | 7. 8 | 4 | 4 | 4 | 4 | 4 |
| | | Carbon Black | | 0. 2 | 0. 1 | 0. 2 | 0. 1 | 0. 1 | 0. 1 | 0. 1 | 0.1 |
| | Extender Pigment | Talc | | 0 | 16 | 32 | 18 | 18 | 18 | 18 | 18 |
| | | Feldspar | | 24 | 16 | 0 | 18 | 18 | 18 | 18 | 18 |
| | Diluent Solvent | VOC Substance | Xylene | 0 | 0 | 14 | 0 | 0 | 0 | 0 | 0 |
| | Diluent Solvent | | n-Butyl Alcohol | 0 | 5 | 3 | 2 | 2 | 2 | 4 | 4.5 |
| | Diluent Solvent | VOC Exempt Substance | Acetone | 0 | 0 | 0 | 0 | 0 | 0 | 0 | 0 |
| | | | Dimethyl Carbonate | 0 | 15 | 0 | 4 | 4 | 4 | 2 | 1.5 |
| | | | tert-Butyl Acetate | 0 | 0 | 0 | 0 | 0 | 0 | 0 | 0 |
| | | | 2-Amino-2-methyl-1-propanol | 0 | 0 | 0 | 0 | 0 | 0 | 0 | 0 |
| | Total | | | 80 | 80 | 86 | 80 | 80 | 80 | 80 | 80 |
| Curing Agent Part (B) | Curing Agent Resin (b) | Resin 1 | Polyamide | 0 | 9 | 5 | 14 | 0 | 0 | 9 | 9 |
| | | Resin 2 | Amide Adduct | 0 | 5 | 3 | 0 | 14 | 0 | 5 | 5 |
| | | Resin 3 | Phenalkamine | 0 | 0 | 0 | 0 | 0 | 14 | 0 | 0 |
| | | Resin 4 | Aliphatic Amine | 10 | 0 | 0 | 0 | 0 | 0 | 0 | 0 |
| | | Resin 5 | Cycloaliphatic Amine | 5 | 0 | 0 | 0 | 0 | 0 | 0 | 0 |
| | Additive | Curing Accelerator (Tertiary Amine ANCAMINE K54) | | 0. 5 | 1. 5 | 1 | 1. 5 | 1. 5 | 1. 5 | 1. 5 | 1.5 |
| | | Non-reactive Diluent (CARDOLITE Lite 2020) | | 4. 5 | 1. 5 | 1 | 1. 5 | 1. 5 | 1. 5 | 1. 5 | 1.5 |
| | Diluent Solvent | VOC Substance | Xylene | 0 | 0 | 2 | 0 | 0 | 0 | 0 | 0 |
| | | | n-Butyl Alcohol | 0 | 1 | 2 | 1 | 1 | 1 | 2 | 2.25 |
| | | VOC Exempt Substance | Acetone | 0 | 0 | 0 | 0 | 0 | 0 | 0 | 0 |
| | | | Dimethyl Carbonate | 0 | 2 | 0 | 2 | 2 | 2 | 1 | 0.75 |
| | | | tert-Butyl Acetate | 0 | 0 | 0 | 0 | 0 | 0 | 0 | 0 |
| | | | 2-Amino-2-methyl-1-propanol | 0 | 0 | 0 | 0 | 0 | 0 | 0 | 0 |
| | Total | | | 20 | 20 | 14 | 20 | 20 | 20 | 20 | 20 |
| Total VOC SubstanceContent | | | | 0 | 6 | 17 | 3 | 3 | 3 | 6 | 6.7 5 |
| Total VOC Exempt SubstanceContent | | | | 0 | 17 | 4 | 6 | 6 | 6 | 3 | 2.2 5 |
| Total Diluent Solvent Content | | | | 0 | 23 | 21 | 9 | 9 | 9 | 9 | 9 |
| Total (A+B) | | | | 100 | 100 | 100 | 100 | 100 | 100 | 100 | 100 |

### 2) Paint composition evaluation

### (1) Evaluation of physical properties

The physical properties of the paint compositions of Embodiments 1 to 12 and Comparative Examples 1 to 6 produced as described above are shown in Tables 3 and 4, respectively. Here, the VOC content (C_{VOC}) was measured in accordance with Equation 1-1 for the undiluted case (D_{MAX} = 0 vol%) and for the case diluted at a dilution rate of 5 vol% (D_{MAX} = 5 vol%). ${C}_{VOC} = \frac{\left[\left(100-NV-{M}_{w}-\sum Es\right)X ρs X 10+{D}_{MAX} X\frac{100 - {M}_{wt} - \sum Est}{100}X ρd X 10\right]}{\left(100+{D}_{MAX}\right) / 100}$

In Equation 1-1, C_{VOC} is the volatile organic compounds (VOC) content (g/L) in the paint composition; NV is the solids content (wt%) in the paint prior to dilution; M_{w} is the water content (wt%) in the paint prior to dilution; M_{wt} is the water content (wt%) in the diluent solvent; ∑Es is the total content of volatile organic compounds (VOC)-exempt substances (wt%) in the paint prior to dilution; ΣEst is the total content of volatile organic compounds (VOC)-exempt substances (wt%) in the diluent solvent; ρs is the density (g/ml) of the paint prior to dilution at 23°C; ρd is the density (g/ml) of the diluent solvent at 23°C; and D_{MAX} is the maximum dilution ratio which is the ratio of diluent solvents (vol%) that can be used as much as possible when diluting paint with a diluent solvent.

Meanwhile, the volume solids content (vol%) was measured according to ISO 3233, the flashpoint was measured according to KS M 2010 (closed-cup) method. In addition, the viscosity was measured at 23°C using a Stormer viscometer according to ASTM D562 in an undiluted state and in a state diluted to 5 vol%, and the sag resistance value for the paint diluted to 5 vol% was measured by the following method.
1. Prepare the test paint by stirring uniformly, and then adjust the temperature to 23±2°C.
2. Place the ANTI SAGMETER at a suitable position on the glass plate.
3. Draw down the prepared sample in a straight line at a constant speed (typically 150 mm/s).
4. Immediately place the support upright so that the thinnest portion of the coating film faces upward to dry.
5. Test under conditions of 23±2°C temperature and 65±10% relative humidity within the test chamber.
6. Evaluate the central portion and select the boldest stripe that is about to contact the stripe below.

### (2) Evaluation of dermal toxicity

The results of the evaluation of dermal toxicity of the paint compositions of Embodiments 1 to 12 and Comparative Examples 1 to 6 produced as described above are shown in Tables 3 and 4, respectively. Here, skin irritation/corrosion was evaluated according to OECD TG 404 (rabbit) and OECD TG 435 (in vitro membrane), and skin sensitization was evaluated according to OECD TG 406 (guinea pig) and OECD TG 442B (mouse).

The risk degree according to the grade follows the order of 1A > 1B > 1C, and the value according to the evaluation conducted in accordance with OECD TG 442B (mouse) is a stimulation index (SI) value used to evaluate the potential for skin sensitization of the test substance, is calculated as a ratio of the proliferation level of the test substance group to that of the solvent control group, and a higher value indicates a higher level of skin sensitization.

**Table 3**

| Classification | | Embodiment | | | | | | | | | |
|---|---|---|---|---|---|---|---|---|---|---|---|
| | | 1 | 2 | 3 | 4 | 5 | 6 | 7 | 8 | 9 | 10 |
| VOC Content (g/L ) | Undiluted | 50 | 34 | 75 | 80 | 60 | 80 | 75 | 60 | 60 | 60 |
| | Thinner Dilution 5% | 87 | 75 | 115 | 115 | 95 | 115 | 110 | 95 | 95 | 95 |
| Volume Solids Content (vol%) | | 87 | 92 | 80 | 72 | 87 | 80 | 87 | 87 | 87 | 87 |
| Visc osit y (KU, 23°C ) | Undiluted | 106 | 107 | 91 | 80 | 106 | 91 | 106 | 104 | 106 | 109 |
| | Thinner Dilution 5% | 93 | 94 | 80 | 70 | 93 | 80 | 93 | 92 | 93 | 95 |
| Sag Resistance | | 800 | 100 | 600 | 500 | 800 | 600 | 800 | 800 | 800 | 800 |
| (µm, @5% dilution) | | | 0 | | | | | | | | |
| Flashpoint (°C) | | 58 | 63 | 45 | 33 | 58 | 58 | 56 | 52 | 57 | 58 |
| Skin Irritation /Cor rosi vene ss | OECD TG 404 | Non - cor ros ive | Non - cor ros ive | Non - cor ros ive | Non - cor ros ive | Non - cor ros ive | Non - cor ros ive | Non - cor ros ive | Non - cor ros ive | Non - cor ros ive | Non - cor ros ive |
| | OECD TG 435 | Non - cor ros ive | Non - cor ros ive | Non - cor ros ive | Non - cor ros ive | Non - cor ros ive | Non - cor ros ive | Non - cor ros ive | Non - cor ros ive | Non - cor ros ive | Non - cor ros ive |
| Skin Sensitization | OECD TG 406 | Non - sen sit izi ng | Non - sen sit izi ng | Non - sen sit izi ng | Non - sen sit izi ng | Non - sen sit izi ng | Non - sen sit izi ng | Non - sen sit izi ng | Non - sen sit izi ng | Non - sen sit izi ng | Non - sen sit izi ng |
| | OECD TG 442B | 1.5 | 1.5 | 1.5 | 1.5 | 1.5 | 1.5 | 1.5 | 1.5 | 1.5 | 1.5 |

**Table 4**

| Classification | | Comparative Example | | | | | | Embodiment | |
|---|---|---|---|---|---|---|---|---|---|
| | | 1 | 2 | 3 | 4 | 5 | 6 | 11 | 12 |
| VOC Content (g/L) | Undiluted | 30 | 92 | 245 | 50 | 50 | 50 | 88 | 103 |
| | Thinner Dilution 5% | 60 | 120 | 280 | 87 | 87 | 87 | 125 | 138 |
| Volume Solids Content (vol%) | | 95 | 65 | 72 | 87 | 87 | 87 | 87 | 87 |
| Viscos ity (KU, 23°C) | Undiluted | 106 | 73 | 118 | 113 | 114 | 100 | 106 | 107 |
| | Thinner Dilution 5% | 93 | 67 | 103 | 102 | 104 | 87 | 93 | 95 |
| Sag Resistance (µm, @5% dilution) | | 800 | 400 | 900 | 800 | 800 | 700 | 800 | 800 |
| Flashpoint (°C) | | 78 | 27 | 30 | 58 | 58 | 58 | 58 | 59 |
| Skin Irrita tion /Corrosiveness | OECD TG 404 | Corr osiv e | Non-corr osiv e | Non-corr osiv e | Non cor ros ive | Non-corr osiv e | Non cor ros ive | Non-corr osiv e | Non-corr osiv e |
| | OECD TG 435 | Corr osiv e | Non-corr osiv e | Non-corr osiv e | Non cor ros ive | Non-corr osiv e | Non cor ros ive | Non-corr osiv e | Non-corr osiv e |
| Skin Sensitization | OECD TG 406 | Cate gory 1A | Non-sens itiz ing | Non-sens itiz ing | Cat ego ry 1B | Non-sens itiz ing | Cat ego ry 1B | Non-sens itiz ing | Non-sens itiz ing |
| | OECD TG 442B | 4.2 | 1.5 | 1.5 | 1.6 | 1.5 | 2.0 | 1.5 | 1.5 |

Referring to Tables 1 to 4, the solventless paint of Comparative Example 1, in which the total content of diluent solvent is 0 wt% and aliphatic amines and cycloaliphatic amines are used as curing agent resins, was found to be unsuitable in terms of dermal toxicity due to skin corrosivity and a high level of skin sensitization. Further, the solvent-based paints of Comparative Examples 2 and 3, in which the total content of diluent solvent exceeds 20 wt%, were found to be unsuitable in terms of eco-friendliness properties and safety due to relatively high VOC content and low flashpoints.

Meanwhile, the paints in Comparative Examples 4 to 6, in which only a single resin was used as the curing agent resin, exhibited relatively high levels of skin sensitization and were therefore unsuitable in terms of dermal toxicity. In addition, Comparative Examples 4 and 5 showed relatively high viscosity, resulting in reduced workability.

On the other hand, the paint composition which is a low-solvent paint having a total diluent solvent content of 5 to 20 wt% and containing two or more curing agent resins selected from the group consisting of a polyamide resin, an amide adduct resin, and a phenalkamine, exhibits relatively low VOC content and relatively high volume solids content, thereby providing excellent eco-friendliness properties and safety, showing low levels of skin irritation/corrosion and sensitization, and indicating low toxicity. In particular, with respect to Embodiments 1 to 10 in which a relatively smaller content of VOC-exempt substances is used as diluent solvents as compared with VOC substances, the VOC content may be further reduced as compared with Embodiments 11 and 12, thereby exhibiting excellent eco-friendliness properties.

### 2. Premium-type paint composition (including AL paste)

### 1) aluminum paste

Aluminum pastes of Embodiments and Comparative Examples including aluminum flakes and an additive (lubricant: oleic acid) and differing in the inclusion of dimethyl carbonate, a non-reactive diluent (cardanol aromatic derivative), organic solvents, and the like from among four VOC-exempt substances (acetone, dimethyl carbonate, t-butyl acetate, and 2-amino-2-methyl-1-propanol) as shown in Table 5, were produced, and the physical properties thereof are shown in Table 5. Here, the content of the regulated substances in the aluminum paste was calculated based on the total content of organic solvents in the paste, and the VOC content (C_{VOC}) was measured according to Equation 1 below, and in Equation 1 below the term composition refers to the aluminum paste. ${C}_{VOC} = \left(100-NV-{M}_{w}-\sum Es\right) X ρs X 10$

In Equation 1,
C_{VOC} is the volatile organic compounds (VOC) content (g/L) in the composition,
NV is the solids content (wt%) in the composition,
M_{w} is the water content (wt%) in the composition,
∑Es is the total content of volatile organic compounds (VOC)-exempt substances (wt%) in the composition,
ρs is the density (g/ml) of the composition at 23°C.

**Table 5**

| | Component | | | | Content (wt%) | | | | | | | | | | |
|---|---|---|---|---|---|---|---|---|---|---|---|---|---|---|---|
| | | | | | Formulation | | | | | | | | | | |
| | | | | | 1 | 2 | 3 | 4 | 5 | 6 | 7 | 8 | 9 | 10 | 11 |
| Compos ition | Aluminum flake (A) | | | | 55 | 65 | 70 | 85 | 65 | 65 | 65 | 40 | 95 | 65 | 60 |
| | Additive | | Lubricant (oleic acid) | | 2 | 2 | 2 | 2 | 2 | 2 | 2 | 2 | 2 | 2 | 2 |
| | Dil uen t sol ven t | Eco-frie ndly solv ent (B) | VOC exemp t Subst ance | Acetone | 43 | - | - | - | - | - | - | - | - | - | 15 |
| | | | | Dimethyl carbonate | - | 33 | - | - | 23 | 10 | - | - | - | - | - |
| | | | | tert-butyl acetate | - | - | - | 13 | - | - | - | 58 | - | - | - |
| | | | | 2-amino-2-methyl-1-propanol | - | - | 28 | - | - | - | - | - | 3 | - | - |
| | | | Non-reactive diluent (cardanol aromatic derivative) | | - | - | - | - | 10 | 23 | 33 | - | - | - | - |
| | | | Total | | 43 | 33 | 28 | 13 | 33 | 33 | 33 | 58 | 3 | - | 15 |
| | | Organic solvent (C) | | Hydrodesulfurized heavy naphtha | - | - | - | - | - | - | - | - | - | 33 | 23 |
| | | Total | | | 43 | 33 | 28 | 13 | 33 | 33 | 33 | 58 | 3 | 33 | 38 |
| | A/B | | | | 1. 28 | 1. 97 | 2. 5 | 6. 54 | 1. 97 | 1. 97 | 1. 97 | 0. 69 | 31 .7 | - | 4 |
| Physical Properties | Regulated Substance Content (wt%) | | | | - | - | - | - | - | - | - | - | - | 33 | 23 |
| | VOC Content (C_VOC_) (g/L) | | | | - | - | - | - | - | - | - | - | - | 52 0 | 45 0 |
| | Specific Gravity | | | | 1. 43 | 1. 57 | 1. 72 | 1. 98 | 1. 62 | 1. 66 | 1. 60 | 1. 25 | 2. 81 | 1. 56 | 1. 53 |
| | Weight Solids Content (wt%) | | | | 55 | 65 | 70 | 85 | 65 | 65 | 65 | 40 | 95 | 65 | 60 |

Referring to Table 5, the aluminum paste of Formulation 8 in which the content of the aluminum flake was less than 50 wt% and the content of the diluent solvent was greater than 50 wt% was relatively low as the solids content based on weight was less than 50 wt% (40 wt%), and the aluminum paste of Formulation 9 in which the content of the aluminum flake was greater than 90 wt% and the content of the diluent solvent was less than 10 wt% was relatively high as the solids content based on weight was greater than 90 wt% (95 wt%). In addition, the aluminum pastes of Formulations 10 and 11 including an organic solvent as a diluent solvent showed relatively high contents of the substance to be controlled and VOC contents (C_{VOC}).

On the other hand, in the aluminum pastes of Formulations 1 to 7 in which the content of aluminum flakes is 50 to 90 wt% and the content of the diluent solvent is 10 to 50 wt %, the VOC content (CVOC) is 400 g/L or less, the content of the substance to be managed is 20 wt% or less, and the weight-based solids content is 50 wt% or more, and thus both high-solids characteristics and eco-friendliness properties are excellent.

### 2) Production of a paint composition

### (1) main part (A)

Bisphenol A-type (BPA) epoxy resin was employed as the main resin; an aliphatic reactive diluent (alkyl glycidyl ether) was employed as the reactive diluent; the non-silicone dispersant soybean lecithin, a silicone-based anti-foaming agent (BYKETOL-SPECIAL), a flow control agent (CRAYVALLAC), and a non-reactive diluent (CARDOLITE Lite 2020) were employed as additives; (1) an aluminum paste or (2) white TiO₂ and carbon black were employed as color pigments; and talc and feldspar were employed as extender pigments. Here, the aluminum paste was varied according to the Embodiments and Comparative Examples by using aluminum pastes of Formulations 1 to 8.

### (2) curing agent part (B)

Six resins (a polyamide, an amide adduct, a phenalkamine, a phenalkamide, an aliphatic amine, and a cycloaliphatic amine) were employed as curing agent resins, and a curing accelerator (the tertiary amine, ANCAMINE K54) and a non-reactive diluent (CARDOLITE Lite 2020) were used as additives.

### (3) Diluent solvent

Xylene and n-butanol were employed as VOC substances, and acetone, dimethyl carbonate, tert-butyl acetate, and 2-amino-2-methyl-1-propanol were employed as VOC-exempt substances.

Paint compositions of Embodiments 1 to 12 and Comparative Examples 1 to 10 were produced, each including the above-described main part (A) and the curing agent part (B) in the formulations shown in Tables 6 to 8.

**Table 6**

| Classifi cation | Raw Material Name | | | | Content (wt%) | | | | | | | | |
|---|---|---|---|---|---|---|---|---|---|---|---|---|---|
| | | | | | Embodimen | | | | | | | | Compar ative Exampl e 1 |
| | | | | | 1 | 2 | 3 | 4 | 5 | 6 | 7 | 8 | |
| Main Part (A) | Main Resin (a) (Bisphenol-A type epoxy resin; BPA) | | | | 2 1 | 20 | 21 | 20 | 21 | 21 | 21 | 20 | 20.9 |
| | Reactive Diluent (Alkyl glycidyl ether) | | | | 1 1 | 10 | 10 | 10 | 11 | 11 | 12 | 6 | 10 |
| | Additive | | Dispersant (Soybean Lecithin) | | 1 | 1 | 1 | 1 | 1 | 1 | 1 | 1 | 1 |
| | | | Silicone-based Anti-foamer (BYKETOL-SPECIAL) | | 1 | 1 | 1 | 1 | 1 | 1 | 1 | 1 | 1 |
| | | | Flow Control | | 1 | 1 | 1 | 1 | 1 | 1 | 1 | 1 | 1 |
| | | | Agent (CRAYVALLAC) | | | | | | | | | | |
| | Colo red Pigm ent | Alum inum Past e | Formulation 1 | | 1 0 | - | - | - | - | - | - | - | - |
| | | | Formulation 2 | | - | 10 | 14 | 17 | - | - | 0. 5 | 22 | - |
| | | | Formulation 3 | | - | - | - | - | 9 | - | - | - | - |
| | | | Formulation 4 | | - | - | - | - | - | 6 | - | - | - |
| | | White TiO₂ | | | - | - | - | - | - | - | - | - | 4 |
| | | Carbon Black | | | - | - | - | - | - | - | - | - | 0.1 |
| | Extender Pigment | | Talc | | 1 5 | 13 .5 | 11 | 11 .5 | 14 .5 | 15 .5 | 14 .5 | 12 | 17 |
| | | | Feldspar | | 1 5 | 13 .5 | 11 | 11 .5 | 14 .5 | 15 .5 | 14 .5 | 12 | 17 |
| | Diluent Solvent | | VOC Mater ials | Xylene | 1 | 2 | 3 | - | - | 2 | 6 | - | 2 |
| | | | | n-Butyl Alcohol | - | - | - | 2 | 2 | - | - | 1 | - |
| | | | VOC Exemp t Mater ials | Acetone | - | - | 5 | - | - | - | - | - | - |
| | | | | Dimethy 1 Carbona te | 2 | 6 | - | - | - | - | 6. 5 | 2 | 4 |
| | | | | tert-Butyl Acetate | - | - | - | - | 3 | 4 | - | - | - |
| | | | | 2-Amino-2-methyl-1-propano 1 | - | - | - | 3 | - | - | - | - | - |
| | Total | | | | 7 8 | 78 | 78 | 78 | 78 | 78 | 78 | 78 | 78 |
| Curing Agent Part (B) | Curing Agent Resin (b) | | Resin 1 | Polyami de | 1 0 | 10 | 9 | - | - | - | 8 | 5 | 6 |
| | | | Resin 2 | Amide Adduct | 7 | - | - | 9 | 9 | - | 5 | 4 | |
| | | | Resin 3 | Phenalk amine | - | 6 | - | 7 | - | 11 | 3 | - | 5 |
| | | | Resin 4 | Phenalk amide | - | - | 5 | - | 8 | 6 | - | 6 | 5 |
| | Additive | | Curing Accelerator (Tertiary amine ANCAMINE K54) | | 1 . 5 | 1. 5 | 1. 5 | 1. 5 | 1. 5 | 1. 5 | 1. 5 | 1. 5 | 1.5 |
| | | | Non-reactive Diluent (CARDOLITE Lite 2020) | | 1 . 5 | 1. 5 | 1. 5 | 1. 5 | 1. 5 | 1. 5 | 1. 5 | 1. 5 | 1.5 |
| | Diluent Solvent | | VOC Mater ials | Xylene | - | 1 | 2 | 1 | 1 | - | 1 | 2 | 1 |
| | | | | n-Butyl Alcohol | 1 | - | - | - | - | - | - | - | - |
| | | | VOC Exemp t Mater ials | Acetone | - | - | - | - | - | 2 | 2 | - | - |
| | | | | Dimethy 1 Carbona te | 1 | 2 | 3 | - | - | - | - | 2 | 2 |
| | | | | tert-Butyl Acetate | - | - | - | 2 | - | - | - | - | - |
| | | | | 2-Amino-2-methyl-1-propano 1 | - | - | - | - | 1 | - | - | - | - |
| | Total | | | | 2 2 | 22 | 22 | 22 | 22 | 22 | 22 | 22 | 22 |
| Total VOC MaterialsContent | | | | | 2 | 3 | 5 | 3 | 3 | 2 | 7 | 3 | 3 |
| Total VOC Exempt MaterialsContent | | | | | 7 . 3 | 11 .3 | 12 .6 | 10 .6 | 6. 5 | 6. 8 | 8. 7 | 11 .3 | 6.0 |
| Total Diluent Solvent Content | | | | | 9 . 3 | 14 .3 | 17 .6 | 13 .6 | 9. 5 | 8. 8 | 15 .7 | 14 .3 | 9.0 |
| Total (A+B) | | | | | 1 0 0 | 10 0 | 10 0 | 10 0 | 10 0 | 10 0 | 10 0 | 10 0 | 100 |

**Table 7**

| Classifica tion | Raw Material Name | | | Content (wt%) | | | |
|---|---|---|---|---|---|---|---|
| | | | | Embodim ent 9 | Embodim ent 10 | Embodim ent 11 | Embodim ent 12 |
| Main Part (A) | Main Resin (a) (Bisphenol-A type epoxy resin; BPA) | | | 21 | 20 | 21 | 21 |
| | Reactive Diluent (Alkyl Glycidyl Ether) | | | 10 | 10 | 11 | 11 |
| | Additi ve | Dispersant (Soybean Lecithin) | | 1 | 1 | 1 | 1 |
| | | Silicone-based Anti-foamer (BYKETOL-SPECIAL) | | 1 | 1 | 1 | 1 |
| | | Flow Control Agent (CRAYVALLAC) | | 1 | 1 | 1 | 1 |
| | Colore | Formulation 8 | | 12 | - | - | - |
| | d Pigmen t (AL Paste) | Formulation 9 | | - | 11 | - | - |
| | | Formulation 10 | | - | - | 13 | - |
| | | Formulation 11 | | - | - | - | 15 |
| | Extend er Pigmen t | Talc | | 13 | 12 | 11 | 11 |
| | | Feldspar | | 13 | 12 | 11 | 11 |
| | Diluen t Solven t | VOC Substa nce | Xylene | - | 4 | - | - |
| | | | n-Butyl Alcohol | 2 | - | 4 | 3 |
| | | VOC Exempt Substa nce | Acetone | - | - | - | - |
| | | | Dimethyl Carbonate | - | 6 | - | 3 |
| | | | tert-Butyl Acetate | - | - | - | - |
| | | | 2-Amino-2-methyl-1-propanol | 4 | - | 4 | - |
| | Total | | | 78 | 78 | 78 | 78 |
| Curing Agent Part (B) | Curing Agent Resin (b) | Resin 1 | Polyamide | 9 | 10 | - | - |
| | | Resin 2 | Amide Adduct | 7 | - | 7 | 9 |
| | | Resin 3 | Phenalkam ine | - | 6 | 8 | - |
| | | Resin 4 | Phenalkam ide | - | - | - | 6 |
| | Additi ve | Curing Accelerator (Tertiary Amine ANCAMINE K54) | | 1.5 | 1.5 | 1.5 | 1.5 |
| | | Non-reactive Diluent (CARDOLITE Lite 2020) | | 1.5 | 1.5 | 1.5 | 1.5 |
| | Diluen t Solven t | VOC Substa nce | Xylene | 1 | - | - | - |
| | | | n-Butyl Alcohol | - | 1 | 2 | 2 |
| | | VOC Exempt Substa nce | Acetone | - | - | - | - |
| | | | Dimethyl Carbonate | 2 | - | - | 2 |
| | | | tert-Butyl Acetate | - | - | 2 | |
| | | | 2-Amino-2-methyl-1-propanol | - | 2 | - | - |
| | Total | | | 22 | 22 | 22 | 22 |
| Total VOC Substance Content | | | | 3 | 5 | 10.29 | 8.5 |
| Total VOC Exempt Substance Content | | | | 13.0 | 8.3 | 6.0 | 7.3 |
| Total Diluent Solvent Content | | | | 16 | 13.3 | 16.3 | 15.7 |
| Total (A+B) | | | | 100 | 100 | 100 | 100 |

**Table 8**

| Classifica tion | Raw Material Name | | | Content (wt%) | | | | | | | | |
|---|---|---|---|---|---|---|---|---|---|---|---|---|
| | | | | Comparative Example | | | | | | | | |
| | | | | 2 | 3 | 4 | 5 | 6 | 7 | 8 | 9 | 10 |
| Main Resin Portion (A) | Main Resin (a) (Bisphenol-A type epoxy resin; BPA) | | | 21 | 20 | 21 | 21 | 20 | 21 | 20 | 22 | 20 |
| | Reactive Diluent (Alkyl glycidyl ether) | | | 11 | 10 | 10 | 11 | 10 | 11 | 10 | 11 | 6 |
| | Addit ive | Dispersant (Soybean Lecithin) | | 1 | 1 | 1 | 1 | 1 | 1 | 1 | 1 | 1 |
| | | Silicone-based Defoamer (BYKETOL-SPECIAL) | | 1 | 1 | 1 | 1 | 1 | 1 | 1 | 1 | 1 |
| | | Flow Control Agent (CRAYVALLAC) | | 1 | 1 | 1 | 1 | 1 | 1 | 1 | 1 | 1 |
| | Color ed Pigme nt (AL Paste ) | Formulation 2 | | 8 | 12 | 9 | 12 | 15 | 10 | 10 | | |
| | | Formulation 1 | | | | | | | | | | 16 |
| | | Formulation 4 | | | | | | | | | 8 | |
| | Exten der Pigme nt | Talc | | 14 .5 | 13 .5 | 15 | 13 .5 | 13 .5 | 14 | 14 .5 | 16 | 10 .5 |
| | | Feldspar | | 14 .5 | 13 .5 | 15 | 13 .5 | 13 .5 | 14 | 14 .5 | 16 | 10 .5 |
| | Dilut ion Solve nt | VOC Substa nce | Xylene | | 2 | 2 | | 1 | | | | |
| | | | n-Butyl Alcohol | 2 | | | 2 | | 2 | 2 | 1 | 6 |
| | | VOC Exempt Substa nce | Acetone | | | 3 | | | 3 | | | |
| | | | Dimethyl Carbonate | 4 | 4 | | | | | | 1 | |
| | | | tert-Butyl Acetate | | | | | 2 | | 4 | | |
| | | | 2-Amino-2-methyl-1-propanol | | | | 2 | | | | | 6 |
| | Total | | | 78 | 78 | 78 | 78 | 78 | 78 | 78 | 78 | 78 |
| Curing Agent | Curin g | Resin 1 | Polyamide | 15 | - | - | - | - | - | - | 10 | 8 |
| Portion (B) | Agent Resin (b) | Resin 2 | Amide Adduct | - | 15 | - | - | - | - | - | 8 | - |
| | | Resin 3 | Phenalkami ne | - | - | 15 | - | - | - | - | - | 6 |
| | | Resin 4 | Phenalkami de | - | - | - | 15 | - | - | - | - | - |
| | | Resin 5 | Aliphatic Amine | - | - | - | - | 15 | - | 9 | - | - |
| | | Resin 6 | Cycloaliph atic Amine | - | - | - | - | - | 15 | 6 | - | - |
| | Addit ive | Curing Accelerator (Tertiary amine ANCAMINE K54) | | 1. 5 | 1. 5 | 1. 5 | 1. 5 | 1. 5 | 1. 5 | 1. 5 | 1. 5 | 1. 5 |
| | | Non-reactive Diluent (CARDOLITE Lite 2020) | | 1. 5 | 1. 5 | 1. 5 | 1. 5 | 1. 5 | 1. 5 | 1. 5 | 1. 5 | 1. 5 |
| | Dilut ion Solve nt | VOC Substa nce | Xylene | | | 2 | 1 | | | 2 | | |
| | | | n-Butyl Alcohol | 2 | 2 | | | 2 | 2 | | | 2 |
| | | VOC Exempt Substa nce | Acetone | | | | | | | 2 | | 3 |
| | | | Dimethyl Carbonate | 2 | 2 | 2 | 3 | | | | | |
| | | | tert-Butyl Acetate | | | | | 2 | 2 | | 1 | |
| | | | 2-Amino-2-methyl-1-propanol | | | | | | | | | |
| | Total | | | 22 | 22 | 22 | 22 | 22 | 22 | 22 | 22 | 22 |
| Total VOC Substance Content | | | | 4 | 4 | 4 | 3 | 3 | 4 | 4 | 1 | 8 |
| Total VOC Exempt Substance Content | | | | 8. 6 | 10 .0 | 8. 0 | 9. 0 | 9. 0 | 8. 3 | 9. 3 | 3. 0 | 15 .9 |
| Total Dilution Solvent Content | | | | 12 .6 | 14 .0 | 12 .0 | 12 .0 | 12 .0 | 12 .3 | 13 .3 | 4. 0 | 23 .9 |
| Total (A+B) | | | | 10 0 | 10 0 | 10 0 | 10 0 | 10 0 | 10 0 | 10 0 | 10 0 | 10 0 |

### 2) Paint composition evaluation

### (1) Properties of compositions

The physical properties of the paint compositions of Embodiments 1 to 12 and Comparative Examples 1 to 10 produced as described above are shown in Tables 9 and 10, respectively. Here, the VOC content (C_{VOC}) was measured in accordance with Equation 1-1 for the undiluted case (D_{MAX} = 0 vol%) and for the case diluted at a dilution rate of 5 vol% (D_{MAX} = 5 vol%). ${C}_{VOC} = \frac{\left[\left(100-NV-{M}_{w}-\sum Es\right)X ρs X 10+{D}_{MAX} X\frac{100 - {M}_{wt} - \sum Est}{100}X ρd X 10\right]}{\left(100+{D}_{MAX}\right) / 100}$

In Equation 1, C_{VOC} is the volatile organic compounds (VOC) content (g/L) in the paint composition; NV is the solids content (wt%) in the paint prior to dilution; M_{w} is the water content (wt%) in the paint prior to dilution; M_{wt} is the water content (wt%) in the diluent solvent; ∑Es is the total content of volatile organic compounds (VOC)-exempt substances (wt%) in the paint prior to dilution; ΣEst is the total content of volatile organic compounds (VOC)-exempt substances (wt%) in the diluent solvent; ρs is the density (g/ml) of the paint prior to dilution at 23°C; ρd is the density (g/ml) of the diluent solvent at 23°C; and D_{MAX} is the maximum dilution ratio which is the ratio of diluent solvents (vol%) that can be used as much as possible when diluting paint with a diluent solvent.

Meanwhile, the volume solids content (vol%) was measured according to ISO 3233, the flashpoint was measured according to KS M 2010 (closed-cup) method. In addition, the viscosity was measured at 23°C using a Stormer viscometer according to ASTM D562 in an undiluted state and in a state diluted to 5 vol%, and the sag resistance value for the paint diluted to 5 vol% was measured by the following method.
1. Prepare the test paint by stirring uniformly, and then adjust the temperature to 23±2°C.
2. Place the ANTI SAGMETER at a suitable position on the glass plate.
3. Draw down the prepared sample in a straight line at a constant speed (typically 150 mm/s).
4. Immediately place the support upright so that the thinnest portion of the coating film faces upward to dry.
5. Test under conditions of 23±2°C temperature and 65±10% relative humidity within the test chamber.
6. Evaluate the central portion and select the boldest stripe that is about to contact the stripe below.

### (2) Evaluation of dermal toxicity

The results of the evaluation of dermal toxicity of the paint compositions of Embodiments 1 to 12 and Comparative Examples 1 to 6 produced as described above are shown in Tables 9 and 10, respectively. Here, skin irritation/corrosion was evaluated according to OECD TG 404 (rabbit) and OECD TG 435 (in vitro membrane), and skin sensitization was evaluated according to OECD TG 406 (guinea pig) and OECD TG 442B (mouse).

The risk degree according to the grade follows the order of 1A > 1B > 1C, and the value according to the evaluation conducted in accordance with OECD TG 442B (mouse) is a stimulation index (SI) value used to evaluate the potential for skin sensitization of the test substance, is calculated as a ratio of the proliferation level of the test substance group to that of the solvent control group, and a higher value indicates a higher level of skin sensitization.

### (3) Properties of coating film

The paint composition produced as described above is applied to a separate substrate and dried to form a coating film. Thereafter, the coating film is then subjected to cathodic debonding and a saline spray test as follows.

### (A) Cathodic debonding test

A cathodic debonding test was conducted on the coating film to evaluate corrosion resistance. Specifically, an anode (positive electrode) metal was attached to the coated specimen using a sacrificial anode method according to ISO 15711 (Method B) and then immersed in seawater for six months to induce artificial defects, film creepage was measured in millimeters, and the results are shown in Tables 9 and 10.

### (B) Saline spray test

A saline spray test was performed on the coating film to evaluate corrosion resistance. Specifically, a scribe line was formed on the test specimen and a saline solution (containing 5 wt% sodium chloride) was sprayed thereon in accordance with ISO 9227 to accelerate aging, rust creepage was measured in millimeters, and the results are shown in Tables 9 and 10.

**Table 9**

| Classific ation | | Embodiment | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| VOC Conte nt (g/L) | Und ilu ted | 30 | 50 | 75 | 50 | 55 | 30 | 85 | 45 | 45 | 65 | 110 | 105 |
| | Thi nne r Dil uti on 5% | 60 | 85 | 110 | 90 | 90 | 65 | 130 | 85 | 75 | 105 | 160 | 155 |
| Volume Solids Content (vol%) | | 87 | 85 | 74 | 84 | 85 | 91 | 80 | 92 | 74 | 85 | 81 | 82 |
| Visco sity (KU, 23°C) | Und ilu ted | 104 | 103 | 95 | 106 | 106 | 109 | 90 | 118 | 90 | 113 | 105 | 98 |
| | Thi nne r Dil uti on 5% | 95 | 92 | 83 | 94 | 93 | 95 | 78 | 105 | 78 | 100 | 90 | 84 |
| Sag Resistanc e (µm, @5% Dilution) | | 800 | 800 | 700 | 800 | 800 | 800 | 800 | 1000 | 700 | 1100 | 800 | 700 |
| Flashpoin t (°C) | | 58 | 55 | 45 | 53 | 55 | 65 | 57 | 53 | 44 | 48 | 51 | 42 |
| Skin Irrit ation /Corr osive ness | OEC D TG 404 | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e |
| | OEC D TG 435 | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e | Non-corr osiv e |
| Skin Sensi tizat ion | OEC D TG 406 | Non-sens itiz ing | Non-sens itiz ing | Non-sens itiz ing | Non-sens itiz ing | Non-sens itiz ing | Non-sens itiz ing | Non-sens itiz ing | Non-sens itiz ing | Non-sens itiz ing | Non-sens itiz ing | Non-sens itiz ing | Non-sens itiz ing |
| | OEC D TG 442 B | 1.5 | 1.5 | 1.5 | 1.5 | 1.5 | 1.5 | 1.5 | 1.5 | 1.5 | 1.5 | 1.5 | 1.5 |
| Cathodic Debonding (Film Creepage; mm) | | 2.3 | 2.1 | 2.0 | 1.9 | 2.1 | 2.3 | 3.5 | 1.8 | 2.7 | 1.9 | 1.9 | 2.0 |
| Saline Spray (Rust Creepage; mm) | | 1.1 | 1.2 | 1.0 | 0.9 | 1.2 | 1.2 | 1.7 | 0.9 | 1.5 | 1.0 | 1.0 | 1.0 |

**Table 10**

| Classificatio n | | Comparative Example | | | | | | | | | |
|---|---|---|---|---|---|---|---|---|---|---|---|
| | | 1 | 2 | 3 | 4 | 5 | 6 | 7 | 8 | 9 | 10 |
| VOC Content (g/L) | Undi lute d | 55 | 65 | 60 | 65 | 55 | 55 | 65 | 60 | 25 | 105 |
| | Thin ner Dilu tion 5% | 90 | 100 | 105 | 105 | 90 | 90 | 100 | 100 | 55 | 155 |
| Volume Solids Content (vol%) | | 87 | 85 | 82 | 85 | 85 | 85 | 85 | 85 | 95 | 68 |
| Viscosi ty (KU, 23°C) | Undi lute d | 106 | 113 | 112 | 112 | 114 | 93 | 92 | 93 | 131 | 80 |
| | Thin ner Dilu tion 5% | 94 | 100 | 99 | 100 | 102 | 81 | 80 | 80 | 117 | 69 |
| Sag Resistance (µm, @5% dilution) | | 800 | 800 | 800 | 800 | 800 | 800 | 800 | 800 | 1100 | 400 |
| Flashpoint (°C) | | 57 | 58 | 59 | 54 | 54 | 52 | 53 | 53 | 71 | 30 |
| Skin Irritat ion /Corros iveness | OECD TG 404 | Non-corro sive | Non-corr osiv e | Non-corr osiv e | Non-corr osiv e | Non-corr osiv e | Corr osiv e | Corr osiv e | Corr osiv e | Non-corro sive | Non-corro sive |
| | OECD TG 435 | Non-corro sive | Non-corr osiv e | Non-corr osiv e | Non-corr osiv e | Non-corr osiv e | Corr osiv e | Corr osiv e | Corr osiv e | Non-corro sive | Non-corro sive |
| Skin Sensiti zation | OECD TG 406 | Non-sensi tizer | Cate gory 1B | Cate gory 1B | Cate gory 1B | Cate gory 1B | Cate gory 1A | Cate gory 1A | Cate gory 1A | Non-sensi tizer | Non-sensi tizer |
| | OECD TG 442B | 1.5 | 1.6 | 1.5 | 2.0 | 1.6 | 3.8 | 4.1 | 4.2 | 1.5 | 1.5 |
| Cathodic Debonding (Film Creepage; mm) | | 3.8 | 2.3 | 2.1 | 2.1 | 2.1 | 1.9 | 2.1 | 2.1 | 2.1 | 2.0 |
| Saline Spray (Rust Creepage; mm) | | 1.8 | 1.1 | 1.1 | 1.1 | 1.1 | 1.0 | 1.2 | 1.2 | 1.2 | 0.9 |

Referring to Tables 5 to 10, the paint composition of Comparative Example 1, which does not include aluminum paste, exhibits greater creepage in cathodic debonding and saline spray tests, and thus relatively poor corrosion resistance. In addition, paint compositions that include, as the curing agent resin, a polyamide resin, an amide adduct resin, a phenalkamine, or a phenalkamide (Comparative Examples 2 to 5), or that include one or two amine-based resins (Comparative Examples 6 to 8), are unsuitable in terms of dermal toxicity.

In addition, the paint composition of Comparative Example 9, in which the total diluent solvent content is less than 5 wt% (4.0 wt%), exhibits high viscosity and thus relatively poor coating workability, whereas the paint composition of Comparative Example 10, in which the total diluent solvent content is greater than 20 wt% (23.9 wt%), exhibits a high VOC content (C_{VOC}), and thus relatively poor eco-friendliness properties, and exhibits low volume solids content and a low flashpoint, resulting in relatively poor safety.

On the other hand, the paint composition of Embodiments 1 to 12, which is a low-solvent paint composition having a total diluent solvent content of 5 to 20 wt%, includes aluminum paste and contains, as curing agent resins, two or more selected from the group consisting of a polyamide resin, an amide adduct resin, a phenalkamine, and a phenalkamide, and exhibits relatively low VOC content and relatively high volume solids content, thereby providing excellent eco-friendliness properties and safety, showing low levels of skin irritation/corrosion and sensitization, and indicating low toxicity.

While example embodiments have been shown and described above, it will be apparent to those skilled in the art that modifications and variations could be made without departing from the scope of the present disclosure as defined by the appended claims.

### Industrial Applicability

Accordingly, features of this disclosure may be applied, in whole or in part, to an aluminum paste, a paint composition, a coating film, and a method for producing the same.

## Claims

1. A paint composition comprising an epoxy resin, a curing agent resin, and a diluent solvent,
wherein the curing agent resin comprises two or more selected from the group consisting of a polyamide resin, an amide adduct resin, a phenalkamine, and a phenalkamide,
wherein the total content of the diluent solvent in the paint composition is 5-20 wt%.

2. The paint composition of claim 1,
further comprising an aluminum paste,
wherein the aluminum paste comprises aluminum flakes and a diluent solvent.

3. The paint composition of claim 2,
wherein the content of the aluminum paste in the paint composition is 1-20 wt%.

4. The paint composition of claim 1,
wherein the diluent solvent comprises one or more VOC-exempt substances selected from the group consisting of acetone, dimethyl carbonate, t-butyl acetate, and 2-amino-2-methyl-1-propanol.

5. The paint composition of claim 4,
wherein the content of the VOC-exempt substance in the paint composition is 2-20 wt%.

6. The paint composition of claim 4,
wherein the diluent solvent further comprises VOC substance.

7. The paint composition of claim 6,
wherein the weight ratio of the VOC substance to the VOC-exempt substance in the diluent solvent is 1:1 to 1:3.

8. The paint composition of claim 1,
wherein a volume solids content is 70-94 vol%.

9. An aluminum paste comprising aluminum flakes and a diluent solvent,
wherein the aluminum flakes are included in a total content of 50-90 wt% based on the total weight of the aluminum paste,
wherein the diluent solvent is included in a total content of 10-50 wt% based on the total weight of the aluminum paste,
and wherein the aluminum paste has a content of the VOC substances (CVOC) of 400 g/L or less.

10. The aluminum paste of claim 9,
wherein the aluminum paste does not comprise an organic solvent as a diluent solvent.

11. A coating film produced from a paint composition according to any one of claims 1 to 8.

12. The coating film of claim 11, wherein the thickness is 1-2000 µm.

13. A method for producing a coating film, comprising the operations of: applying a paint composition according to any one of claims 1 to 8 on a substrate; and drying the paint composition applied on the substrate.
